# EUROPEAN PATENT SPECIFICATION

(11) **EP 2 628 849 B1**
(45) Date of publication and mention of the grant of the patent: **22.10.2014**
(21) Application number: 13155317.4
(22) Date of filing: 14.02.2013
(51) Int. Cl.: D06P 1/00, D06P 3/14, D06P 3/30, D06P 5/22, B01J 13/18, C09B 67/00, C09K 11/00, D06M 23/12, C09B 67/02

(54) **Method for colouring natural textile fibers**
Verfahren zum Färben natürlicher Textilfasern
Procédé de coloration de fibres textiles naturelles

(30) Priority: 15.02.2012 IT PG20120006
(43) Date of publication of application: 21.08.2013
(73) Proprietor: Ferrini - Societa' a Responsabilita' Limitata, 06089 Torgiano (PG) (IT)
(72) Inventor: Spogli, Roberto, 06122 PERUGIA (PG) (IT); Sisani, Michele, 06125 PERUGIA (PG) (IT); Latterini, Loredana, 06053 DERUTA (PG) (IT); Nocchetti, Morena, 06135 PERUGIA (IT)
(74) Representative: Cutropia, Gianluigi

(56) References cited:
- AT-B- 243 949
- DE-U1-202009 008 015
- DATABASE WPI Week 201145 Thomson Scientific, London, GB; AN 2011-E30391 XP002686616, & CN 101 982 509 A (UNIV BEIJING CHEM TECHNOLOGY) 2 March 2011 (2011-03-02)

## Description

### FIELD OF THE INVENTION

The present invention relates to dyeing of natural protein fibers for knitted garments with fluorescent or thermochromic or photochromic dyes.

The present invention relates to the creation of textile products made of natural protein fibers dyed for knitted garments having thermochromic photochromic and/or fluorescent properties, using a method of dyeing which includes the use of lamellar inorganic solids functionalized with species dyes of different nature.

### PRIOR ART

In the field of natural protein fibers for clothing, and in particular in the field of esteemed natural protein fibers such as wool, silk and cashmere, it is important the value given to textile fiber from the dyeing, that is expressed in visual perception of colour, characterized by tonality, saturation and brightness. The technical properties of the dyed fiber such as softness and color resistance to natural degradation of pigments due to phenomena photochemical, thermal, chemical and mechanical stress caused by washings and wear of the clothes are also important.

While on synthetic fabrics have been already applied technologies that provide to the manufacts properties that go beyond the simple dyeing, allowing the realization of innovative clothings able to determine a competitive commercial advantage, this is not yet possible with the natural fiber fabrics destined to the knitted garments. In fact for synthetic fabrics are already available technologies for the use of dyes that change color with changes in function of the body temperature (thermochromic), that change color due to the different light exposition (photochromic), or that are able to absorb and emit visible light when illuminated in low light conditions (fluorescent).

The thermochromic and photosensitive dyes have been applied successfully on natural fabrics, especially cotton, but also in wool, by means of techniques which provide the coating or molding of the dyes, but never on yarns for knitted garments.

In fact the techniques above described, cannot be applied to natural protein fibers, with particular reference to those esteemed, destined to the knitting yarns for four main problems.

The first problem concerns the lack of fastness of these dyes when used with natural protein textile fibers, due to the lack of chemical affinity between dye and fiber, that can not be improved by using the standard procedures of dyeing of knitting yarns.

The second concerns the rapid degradation of fluorescent, thermochromic and photochromic species due to light, temperature or washing cycles stress.

The third problem concerns the use of unstable dyeing species that may cause allergic reactions, itching, contact dermatitis and skin irritation produced by sensitization or intolerance to dyeing species or their degradation products.

The fourth concers the techniques of coating and molding that often alter the texture of the yarn by reducing its softness.

It is known that some lamellar solids are capable of absorbing/intercalate dyeing species including those having some additional properties such as thermochromic, photochromic and fluorescent, and as a result of the incorporation of dyeing species in the lamellar solid, these are protected from photochemical, thermal and chemicals, such as hydrolysis or oxidation, degradative phenomena. In addition, the intercalation of the dyeing species in the lamellar solid does not allow a direct contact between the dye (or its degradation products) and the skin, this drastically reduces the onset of problems due to sensitization or cutaneous intolerance towards the dyes.

However due to the nature of the inorganic lamellar solids in general, it is not possible to anchor stably these intercalation compounds to natural textile fibers, and in fact while many applications of this type are known in the field of synthetic yarns, of the polymers in general and in cosmetics, do not exist in our knowledge applications in the field of natural protein fibers.

DE 20 2009 0080 15 U1 has the aim to produce luminescent or fluorescent lamellar silicates (belonging to the family of lamellar solids) useful in the field of bioanalysis. In this context, the prepared materials must bind to proteins. The lamellar solid is functionalized with pendant groups for protein binding. The pendants are covalently bound to the lamella of the intercalation compound. However, the used dyes are constituted by complexes of rare earth metals, a class of materials completely different from the dyes employed for dyeing natural fibers. The main purpose is to make diagnostic kits, that not involving in the execution procedure a washing step with surfactants or detergent as in the case of textile fibers. In addition, the particles of lamellar solids are very small, and have a maximum length of the order of 100 nanometers in all 3 dimensions in order to penetrate into the cells. So small particles may cause safety and health problems, because particles may penetrate through the skin surface and be absorbed causing adverse reactions and side effects such as inflammation, dermatitis, hives or accumulation in tissues with cell degeneration even up to onset of serious diseases.

The scientific publication WPI AN 2011-E30391 describes the use of the hydrotalcite for the intercalation of a pigment (curcumin 17, or AY17) with the intention to increase the thermal and light stability. Such pigment is used to dye wool and silk. It is a simple intercalation compound constituted by hydrotalcite and curcumin realized in order to increase the stability of the pigment curcumin. This system, however, would present considerable limits in case of application in the dyeing of textile fiber because:
1) the intercalation compound does not stably anchor to the textile fiber;
2) it does not prevent the release of dye in the case of washing or rubbing;

In the cited documents is completely absent a technology similar to that proposed in the present invention that allows the dyeing of natural protein fibers using intercalated and/or absorbed dyes in lamellar solids, that are stably anchored to the natural protein textile fiber through a suitable polymeric coating able to make a stable bond with the fiber.

### AIM OF THE INVENTION

The aim of the present invention is to provide a method for colouring natural textile fibers that solves the drawbacks of the prior art, which is efficient, effective and that allows a lasting dyeing of natural protein fibers even after several washing cycles.

This object is achieved in accordance with the invention with the characteristics listed in appended independent claim 1.

Advantageous relations of the invention appear from the dependent claims.

### SUMMARY OF THE INVENTION

The present invention relates to a method for colouring and/or dyeing natural protein textile fibers comprising the following steps:
a) intercalation and/or absorption of dyes into lamellar solids, in order to obtain a solid lamellar intercalated with dyes,
b) polymeric coating of the surface of the lamellar solid intercalated with dyes, in order to obtain a microcapsule totally coated with polymeric film having a substantially spherical shape and a diameter ranging between 1 - 10 microns,
c) formation of polymeric pendants on the surface of microcapsules in order to anchor the microcapsules to natural protein fibers

### BRIEF DESCRIPTION OF THE FIGURES

Figure 1. Schematic illustration of the intercalation reaction of the dye in the lamellar solid, and schematic illustration of the functionalisation of the lamellar solid according to the grafting method and according to the surface coating method.
Figure 2. Example of a natural protein structure with polypeptide chains [Gly-Ser-Gly-Ala-Gly-Ala]ₙ and schematic illustration of the arrangement of the dye-system consisting of the lamellar solid functionalized according to the methods of the invention between the tertiary structure of aminoacidic chains.
Figures 3. Three-dimensional molecular models obtained with the HyperChem program, which illustrate the molecular arrangement of zinc aluminum hydrotalcite intercalated with fluorescein, and zinc aluminum hydrotalcite intercalated with methyl orange.
Figures 4. X-ray diffraction patterns and thermogravimetric analyses used to assign the molecular structures of lamellar solids intercalated and/or grafted according to the invention, together with the summary table of the characteristics interlayer distances of lamellar solids.
Figure 4A. X-ray powder diffraction pattern of zinc aluminum nitrate hydrotalcite (Prolabin & Tefarm) used for the subsequent functionalization of the lamellar solid.
Figures 4B. X-ray powder diffraction pattern and thermogravimetric analysis of zinc aluminum hydrotalcite intercalated with methyl orange (Example 1). Figures 4C. X-ray powder diffraction pattern of the intermediate zinc aluminum hydrotalcite intercalated with perchlorate and X-ray powder diffraction pattern of the final product zinc aluminum hydrotalcite intercalated with fluorescein (Example 2).
Figure 4D. X-ray powder diffraction pattern of the crystalline alpha zirconium phosphate and X-ray powder diffraction pattern of the *alpha zirconium phosphate intercalated with rhodamine B* (Example 3).

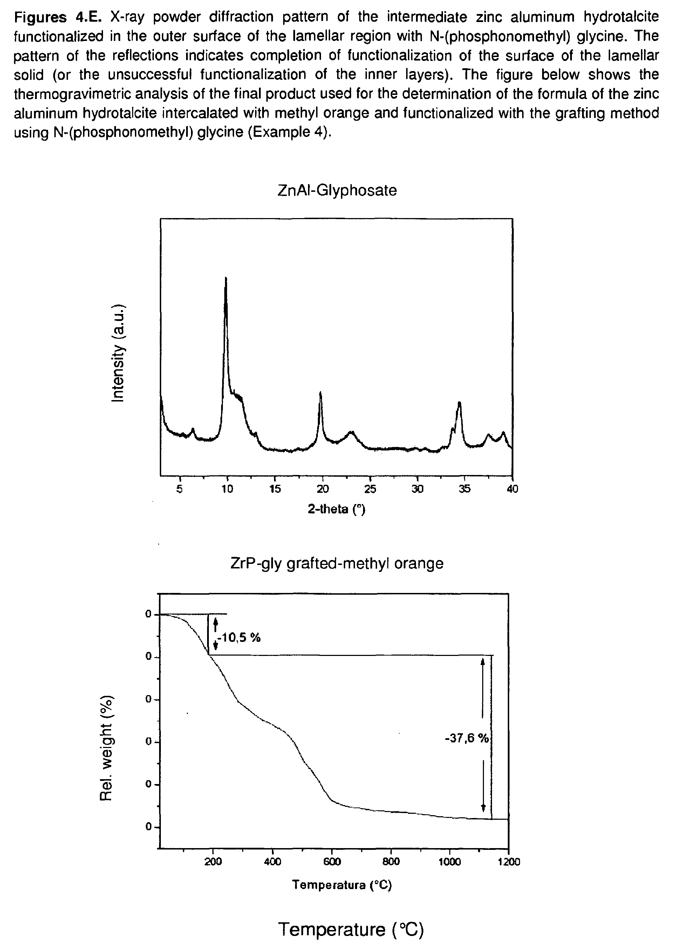

Figure 4E. X-ray powder diffraction pattern of the intermediate zinc aluminum hydrotalcite functionalized in the outer surface of the lamellar region with N-(phosphonomethyl) glycine. The pattern of the reflections indicates completion of functionalization of the external surface of the lamellar solid and the unsuccessful functionalization of the inner layers). The figure below shows the thermogravimetric analysis of the final product used for the determination of the formula of the zinc aluminum hydrotalcite intercalated with methyl orange and functionalized with the grafting method using N-(phosphonomethyl) glycine (Example 4).
Figure 4F. Characteristics interlayer distances of reported lamellar solids in Angstrom (10⁻¹⁰ m).
Figures 5. Figures 5A. In the left part of the figure absorption spectra of solid rhodamine B as such (blue line) and intercalated in alpha-zirconium phosphate (black line) are overlapping. In order to show the photostability of rhodamine B intercalated in lamellar solid, in the right part of the figure the absorption spectra of a cashmere fiber dyed with rhodamine B intercalated in alpha zirconium phosphate before (black line) and after (red circles) irradiation at 550 ± 30 nm for 150' are reported.

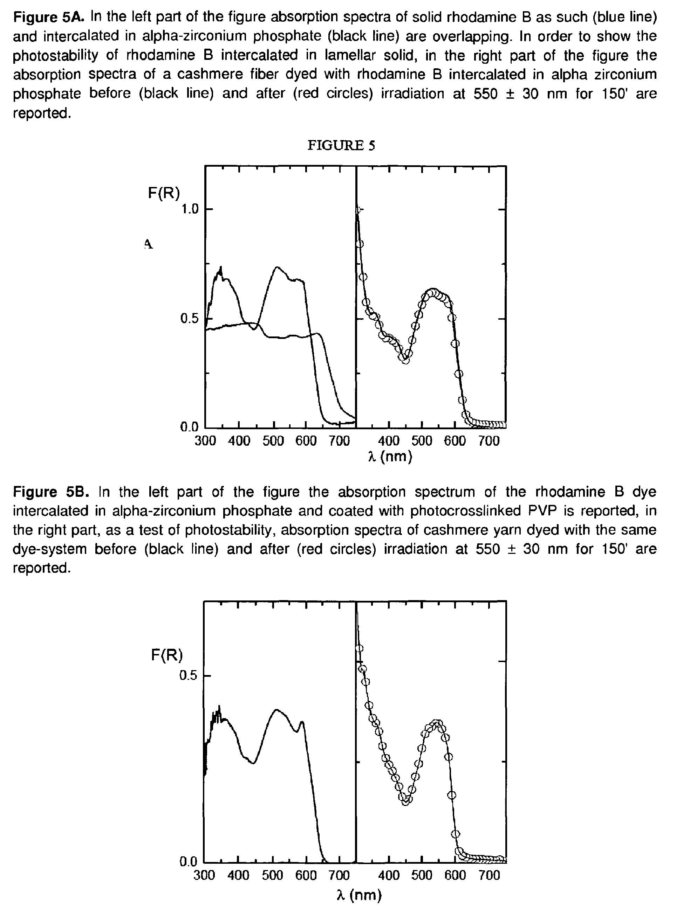

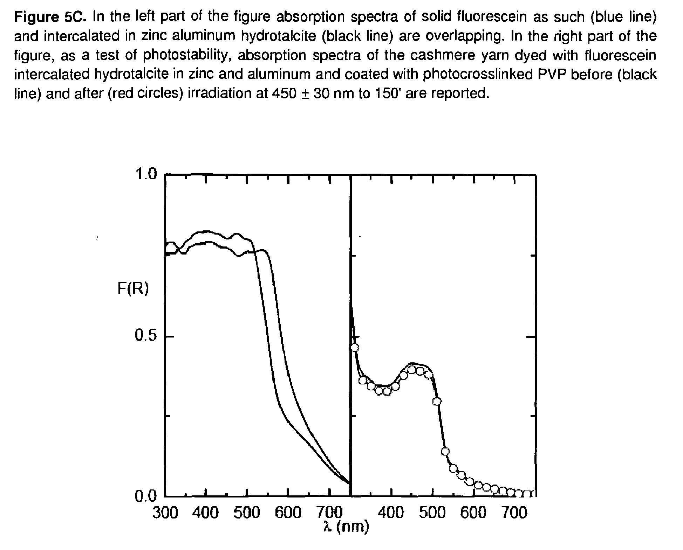

Figures 5B. In the left part of the figure the absorption spectrum of the rhodamine B dye intercalated in alpha-zirconium phosphate and coated with photocrosslinked PVP is reported, in the right part, as a test of photostability, absorption spectra of cashmere yarn dyed with the same dye-system before (black line) and after (red circles) irradiation at 550 ± 30 nm for 150' are reported. Figure 5C. On the left side of the figure, the absorption spectra of solid fluoresceine as it is (blue line) and intercalated within zinc aluminium hydrotalcite (black line) are overlapped. On the right side of the figure, as a proof of photostability, absorption spectra of the cashmere yarn dyed with fluorescein intercalated hydrotalcite in zinc and aluminum and coated with photocrosslinked PVP before (black line) and after (red circles) irradiation at 450 ± 30 nm to 150' are reported.
Figures 6. Figures 6A. Optcal and fluorescence microscopy images of a cashnere yarn dyed with rhodamine B intercalated in alpha-zirconium phosphate and coated with photocrosslinked PVP; scanning area 360x300 µm² (left) and 233x233 µm² (right).
Figures 6B. Optical and fluorescence microscopy images of a cashnere yarn dyed with fluorescein intercalated in alpha-zirconium phosphate and coated with photocrosslinked PVP are reported; scanning area 360x300 µm² (left) and 233x233 µm² (right).
Figure 7. Image of a flake of cashmere industrially dyed using alpha-zirconium phosphate intercalated with rhodamine B and coated with photocrossliked PVP. The image emphasizes the uniformity of the dyeing on the flake as a proof of the effectiveness of the dye-system.
Figures 8. Schematic model view and the scanning electron microscopy (SEM) image of the microcapsules consisting of intercalation compound (lamellar solid /fluorescent dye) coated with polyethylmethacrylate polymer.
Figures 9. Optical microscopy images of microcapsules consisting of intercalation compound (lamellar solid/fluorescent dye) coated with polyethylmethacrylate polymer with dyes of different colors.

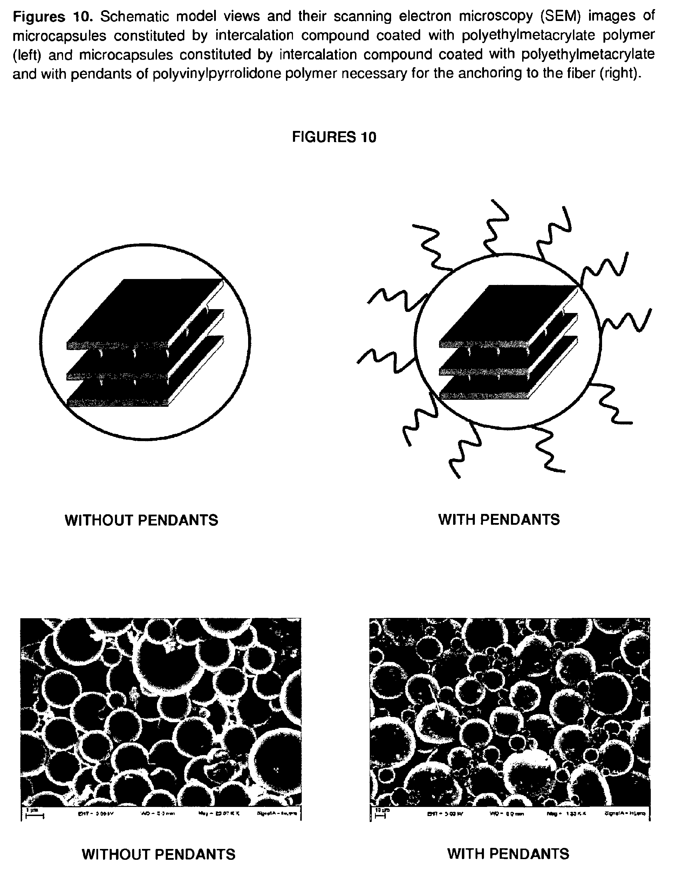

Figures 10. Schematic model views and their scanning electron microscopy (SEM) images of microcapsules constituted by intercalation compound coated with polyethylmethacrylate polymer (left) and microcapsules constituted by intercalation compound coated with polyethylmethacrylate and with pendants of polyvinylpyrrolidone polymer necessary for the anchoring to the fiber (right).

### DETAILED INVENTION DESCRIPTION

In the context of the present invention the following definitions will be used:
Lamellar solid is a compound devoid of organic carbon that, because of its chemical structure, forms a solid organized in a series of lamellae namely, crystals provided of lowest dimensions that the remaining two (see chapter 1, Vol VII of Comprehensive Supramolecular Chemistry, Pergamon Press, Oxford, 1996)
   If the lamellae show an electric charge (positive or negative), ions provided of opposite charge position themselves in the interlamellar space in order to maintain solid neutrality. Such ions can be substituted by dye molecules in ionic form by ion exchange mechanism;
Intercalation compound is a material obtained by functionalization (intercalation) of molecules or atomic or molecular ions in the interlamellar region of lamellar solids;
Lamellar pack are a series of pillared lamellae oriented as paper foils and form a particle of lamellar solid.
Intercalation site is the site in which the electric charge (positive or negative in depending on the inorganic type) that will be neutralized by ionized dye molecule;
Protein natural textile fiber represents fibrous products of natural origin that, because of their structure, lenght, strenght and elasticity show the ability to join, by spinning mill, in thin strands, flexible and hard employed in textile industry for spun manufacturing. Such products by weaving will be converted in fabric or sweater. Protein natural textile fibers are characterized by aminoacidic chains provided by primary, secondary and tertiary structures that together form supramolecular structures.

A dye is a chemical substance which has the ability to colour a substrate, by absorbing a portion of visible radiation and reflecting the remaining fraction, or emitting a specific portion of visible radiation.

The invention concerns the use of a complex system consisting of lamellar solids functionalized with inorganic dyes to dye the natural protein fibers. The lamellar solids are coated and modified to facilitate adhesion of the system to the natural protein fibers.

The inorganic lamellar solid intercalated with the dye is constituted by dye molecules supported on the lamellae of the inorganic solid through ionic bonds, and the resulting system solid lamellar-dye is said intercalation compound.

Among the inorganic lamellar solid with intercalation properties (see Chapter 1 of Volume VII of Comprehensive SupramolecularChemistry, Pergamon Press, Oxford, 1996) for the purposes of the invention, will be considered only those with negative charge of the lamellae, balanced by cations inserted in the interlayer region (so-called lamellar cationic solids) and those with positive charge, that present anions incorporated in the interlayer region, (so-called lamellar anionic solids) (interlamellar e interlayers are synonym). Between lamellar cationic solids have to be considered cationic clays (montmorillonite, vermiculite, fluoroectorite, bentonite) and phosphates of zirconium or titanium, which are able to intercalate through a cationic exchange process. They are able to intercalate dyes containing functional groups which can be converted into cations, typically amminic groups able to give a quaternary ammonium cations. Among lamellar anionic solids have to be considered the synthetic hydrotalcites, also known as anionic clays or lamellar double hydroxides (the name is related to the two cations in the lamella, eg. Mg₆Al₂ (OH)₁₆CO₃) which may be intercalated by a anion exchange process dyes with anionic functional groups, typically carboxylic groups, phenols, sulfonic acids, phosphonic acids.

Lamellar solids suitable for the intercalation of anionic dyes are the synthetic hydrotalcites Mg-Al or Zn-Al, with a molar ratio Mg(Zn)/Al ranging from 1.5 to 4, and with an anion exchange capacity ranging from 2 to 5 milliequivalents / gram (meq / g). Zinc and magnesium are particularly inert and safe for human health, [1) C. Del Hoyo, "Layered double hydroxides and humanhealth: An overview", Applied Clay Science 36 (2007) 103-121. 2) Jae-Min Oh, ab Timothy T. Biswicka and Jin-Ho Choy, "Layered nanomaterials for green materials", J. Mater. Chem., 2009, 19, 2553-2563] and have a low impact on the environment, and are relatively cheap and suitable for use in industrial manufacturing.

Other lamellar solids suitable for the intercalation of cationic dyes are alfa and gamma zirconium phosphates. Zirconium phosphates are appropriated for their chemical stability, low cost, and their inertia and security against human health (Roming M. et al., ZrO(HPO4)1-x(FMN)x: Quick and Easy Synthesis of a Nanoscale Luminescent Biomarker Angew. Chem. Int Ed 2010, 49, 632 -637; A. Diaz et al. Nanoencapsulation of Insulin into Zirconium Phosphate for Oral Delivery Applications, Biomacromolecules 2010, 11, 2465-2470).

Hydrotalcites derive from brucite Mg(OH)₂ for isomorphous substitution of Mg/Al, that creates an excess positive charge, balanced by anions present in the interlayer region (eg. Cl⁻ or NO₃⁻). The charge depends on the substitution Mg / Al and is expressed as charge density, and determines the anion exchange capacity (meq / g). The general formula of synthetic hydrotalcites or layered double hydroxides can be written as general formula (I):

[M(II)₁₋ₓM(III)ₓ(OH)₂]^{x+}[Aⁿ⁻_{x/n}]^{x-} xmS (I)

where M(II) is a metal of valence (II), selected between Mg, Zn, Co, Ni, Mn, Cu; M (III) is a metal of valence (III) selected among Al, Cr, Fe, V, Co; Aⁿ⁻ is an anion having negative charge n, which balances the charge; m indicates the number of solvent molecules (generally water) co-intercalated (S). M(III) moles (x) on the compound generally ranges between 0.20 and 0.40 and its value determines the layer charge density and the anion exchange capacity. The moles of co-intercalated solvent, m, ranges between 0 and 2, depending on the nature of A and on the degree of intercalation (for example 0.6 H₂O).

Zirconium phosphates are acidic lamellar solids, with high chemical and thermal stability and able to intercalate different molecules of various sizes in the interlayer region. Zirconium phosphates exist in different phases that change in interlayer distance and in the crystal structure. Alpha and gamma type are the most used and their formulas are shown below:

alpha Zr(HPO₄)₂•H₂O

gamma Zr(PO₄)(H₂PO₄)•2H₂O

The formulas of zirconium phosphates after intercalation, with a dye cation having generic of formula Bⁿ⁺ and net charge equal to n, become:

alpha: Zr(HPO₄)₂₋ₙₓ [(Bn+PO₄)ₓₙ] •H₂O

gamma: Zr(PO₄)(H₂PO₄)₁₋ₙₓ [(Bⁿ⁺HPO₄)ₓₙ]•2H₂O

The number of moles x in the compound generally ranges between 0.1 and 2; in detail in the alpha phosphates is comprised between 0.1 and 1 in phosphate range type, also its value determines the degree of ion exchange.

The preparation of the lamellar solid intercalated with the dye consists on the intercalation of the dye molecules into the inorganic solid, normally by an ion exchange reaction, which allows to introduce the chosen dye in the galleries of the inorganic lamellar solid (complex molecule - solid, inorganic, also named as intercalation compound). The intercalation process is carried out according to known procedures, as described for example in Z. Kristallogr. 224 (2009) 273-281 / DOI 10.1524/zkri.2009.1153: the powder of the lamellar solid is dispersed in a solution containing the dye in ionic form. The ion exchange is obtained stirring the solution at the selected temperature; using suitable volumes of solution and concentrations able to obtain the partial or complete exchange of the ions present in the starting solid with the active ingredient.

Prior art foreseen that complexed constituted by lamellar solid and dyes in which the lamellar solid is an hydrotalcite can also be obtained by using the procedures known as direct precipitation, that consists on the precipitation of double hydroxides in presence of the active principle in anionic form, and reconstruction of the lamellar structure from the mixed oxides in an aqueous solution, which contains the active substance (see: F. Cavani, F. Trifirò, A. Vaccari, Catal. Today, 11 (1991) 173).

The intercalation compound can be characterized through thermogravimetrical measurement, that gives the amount of inorganic residue after thermal degradation at 800 ° C (and for difference the amount of dye present in the intercalation compound), X-ray diffraction analysis using X-ray source, and UV visibile spectrophotometry, that yield evidence of the dye intercalation.

The inorganic lamellar solid is choosen according to the type of natural protein fiber and to the type of dye. After choosing a dye molecule parameters that may vary are:
1. Type of lamellar inorganic solid. Solids with negative charge on the lamellae (smectic clays, phosphates of Zr (Ti) lamellar) can be used for cationic dyes, while solids with positive charge (natural or synthetic hydrotalcites) can be used for anionic dyes. Both types of solid are in the form of microcrystalline powder, which dimensions typically ranges between 0.01-100 microns, preferably 0.1-50 microns, or more preferably 1-20 microns.
2. Charge density. The maximum load of dye in the lamellar solid can be modulate changing the charge density (from 2 to 5 or 2 to 4 mmol / g). Hydrotalcites with selected value of charge density can be synthesized according to the state of the art. The ratio between the metals M (III) / M (II) can be modulate modifying the parameter x in the general formula (I).
3. Extension of the ion-exchange reaction, that involves a different percentage of ion exchange and different dye loading. It's possible to partially exchange anions or protons already present in the lamellar solid with the dye. If, eg., the ion exchange capacity of an hydrotalcite is 0.37 moles per mole of compound, the hydrotalcite can load the active molecule up to a maximum of 0.37 moles, being able to stop even at lower values (for eg. 0.20 moles per mole of compound).

Organic molecules belonging to the class of azo dyes, acridones, xanthenes, flavins, quinones, anthraquinones, triaryl-methanes, cyanines, perylenes, diarylethenes, spyrobenzopyrones, chromenes, fulgides, can be used as organic dyes to intercalate into inorganic matrices discussed in the present invention. In detail, some of the possible molecules or organic dyes that can be used according the invention are: phenolphtalein, rhodamine, xylenol orange, fluorescein, methyl orange, phenyl-azobenzene, eosin.

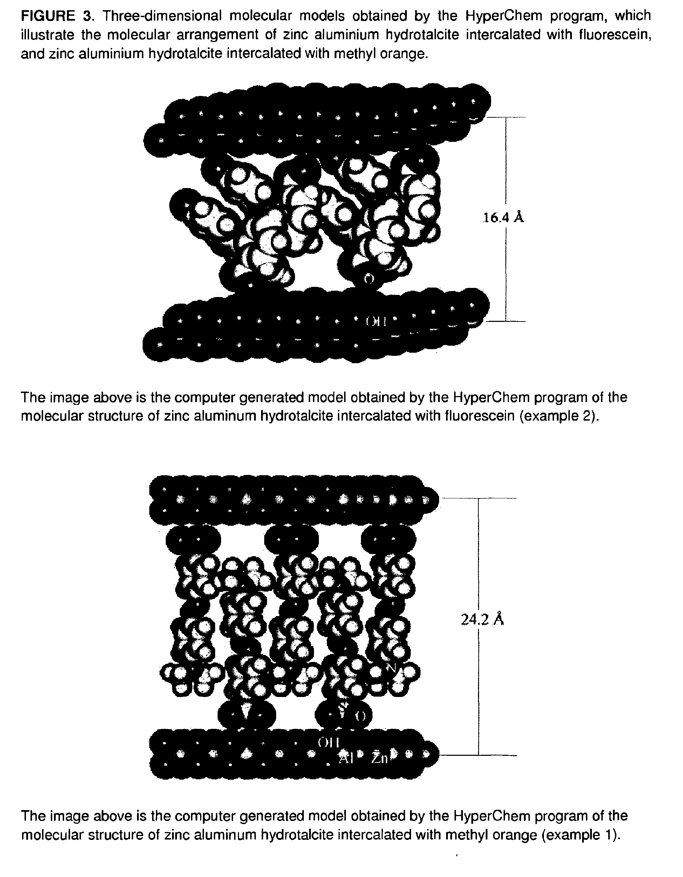

Dye intercalation into lamellar solids are described in Examples 1, 2 and 3. Figure 3 shows the structure modeled with computer.

Using directly lamellar solids intercalated with dyes for dyeing the natural protein fiber present a problem: the solids are not strongly anchored to the fiber protein. In fact, the inorganic matrix of the solid is not suitable for stably bind to the protein structure using the standard dyeing conditions, that is based on the use of dilute aqueous solutions of weak acids, heated up to a maximum of 100 °C for times ranging between 15-60 minutes.
Stronger chemical treatments cannot be used because of possible damage of the natural protein fiber. Using these systems (lamellar inorganic solids intercalated with dyes) for directly dyeing natural fibers protein are obtained products that quickly lose the color after normal washing processes, (see Table 1, N. 2) due to poor adhesion of these systems to natural protein fibers.

Two methods have been developed to solve the problem described above and allow the anchorage between the intercalation compound and the natural protein fiber. These methods concern the engineering of the intercalation compound through a secondary functionalization, where for primary functionalization has to be intended the dye intercalation.

The first method involves the modification of the lamellar solid before dye intercalation and it is named METHOD OF GRAFTING, the second method provides the modification of the lamellar solid after the intercalation reaction and it is named METHOD OF SURFACE COATING.

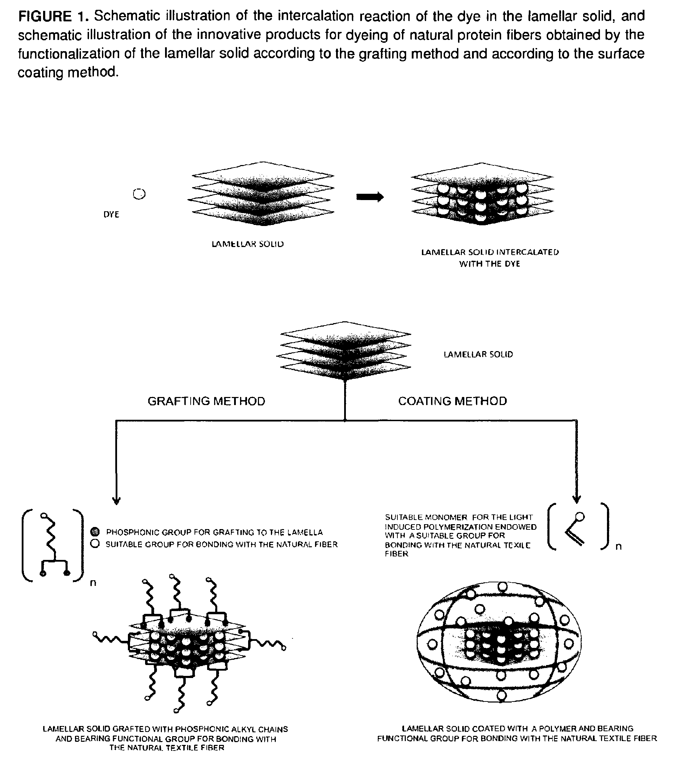

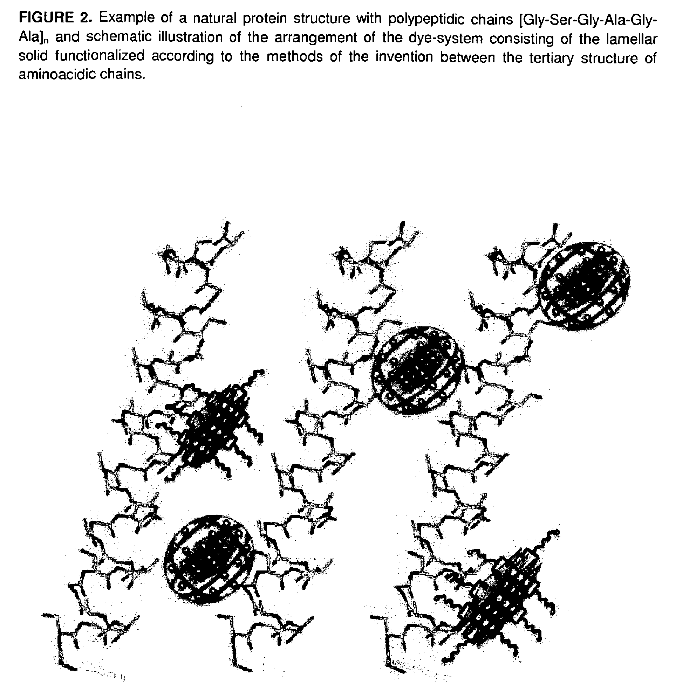

The method of grafting is based on the functionalization of the external surface of the solids. Alkyl pendants are covalently bonded to the external lamellae of the inorganic solid and have functional groups capable of stably binding the natural protein fiber during the process of dyeing.
The alkyl pendants present terminal phosphonic groups suitable to give a particular chemical reaction named grafting. The covalent bond between the alkyl pendants and the intercalation compound is achieved by losing a water molecule; that comes from the phosphonic acid and a hydroxyl group of the lamella of the solid. Among lamellar solids hydrotalcites are more suitable for the method of grafting. The alkyl pendant binds the natural protein fiber because they are funtionalized on the other side with an acid group, preferably carboxylic. These acid groups are able to react with the amino acid residues in the lateral chain, or with amide or hydroxyl terminal group of natural protein fiber forming amide or ester groups (see Figures 1 and 2).

The formulas of generic structure of the pendant side are the following:

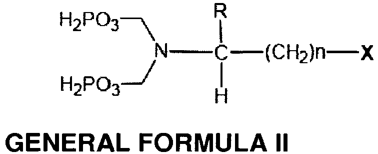

H2PO₃-(CH₂)n-x **GENERAL FORMULA III**

Where
X = COOH, SO₃H,
n = (0-24)
R = H, CH₃, SH, CH₂CH₂SH, OH, CH₂OH, CH₂CH₂OH, CH₂-(2-Imidazol), CH₂CH₂NHC(NH)NH₂, CH₂COOH, CH₂CONH₂, CH₂SH, CH(CH₃) CH₂CH₃, isopropyl, CH₂CH₂CH₂CH₂NH₂, CH₂CH₂SCH₃, benzyl, CH(OH)CH₃, CH(CH₃)₂.

The lamellar solid is functionalized with the alkyl pendants by disperding the solid in a solution of water or water and organic solvent containing the pendant alkyl. The amount of alkyl pendant is choosen in order to functionalize only the external lamellae of the lamellar solid (see figure 1).
This condition is reached by using a molar quantity of the pendant equal to 0.1-15% of the ion exchange capacity of the lamellar solid, preferably equal to 1-10%, and more preferably equal to 3-7%.
Low amounts of alkyl pendands functionalize only the surface of the lamellar solid, because of the high affinity of phosphonic groups towards the ion-exchange reaction and the accessibility of the superficial exchange sites.
Then a heat treatment, typically but not exclusively conducted during the drying of the functionalized lamellar solid (80 ° C, 12 hours), leads to the grafting reaction that leads to a pendant linked covalently and irreversibly to the surface of the lamellar solids in the planned conditions.
The successful functionalization of the surface lamellar solid is confirmed by X-ray diffraction analysis, thermogravimetric analysis and infrared spectroscopy.
The remaining portion of ions, susceptible of ion-exchange reaction, are in the interlayer region of the lamellar solid, and they are functionalized with dyes, according to ion exchange procedures already known, see (Umberto Costantino, Natasha Coletti, Morena Nocchetti, Gian Gaetano Aloisi, Fausto Elisei), Langmuir, 1999, 15 (13), pp. 4454-4460, DOI:10.1021/la981672u.

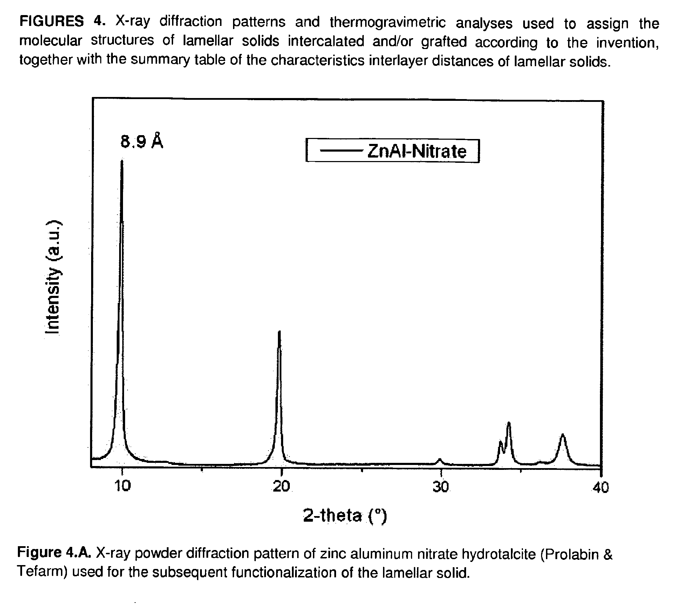

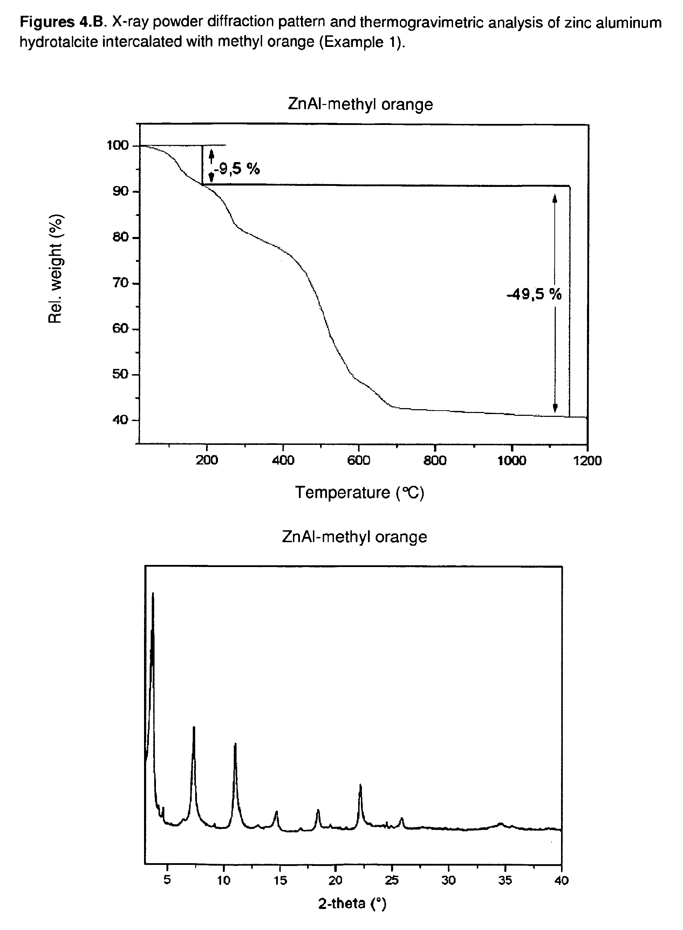

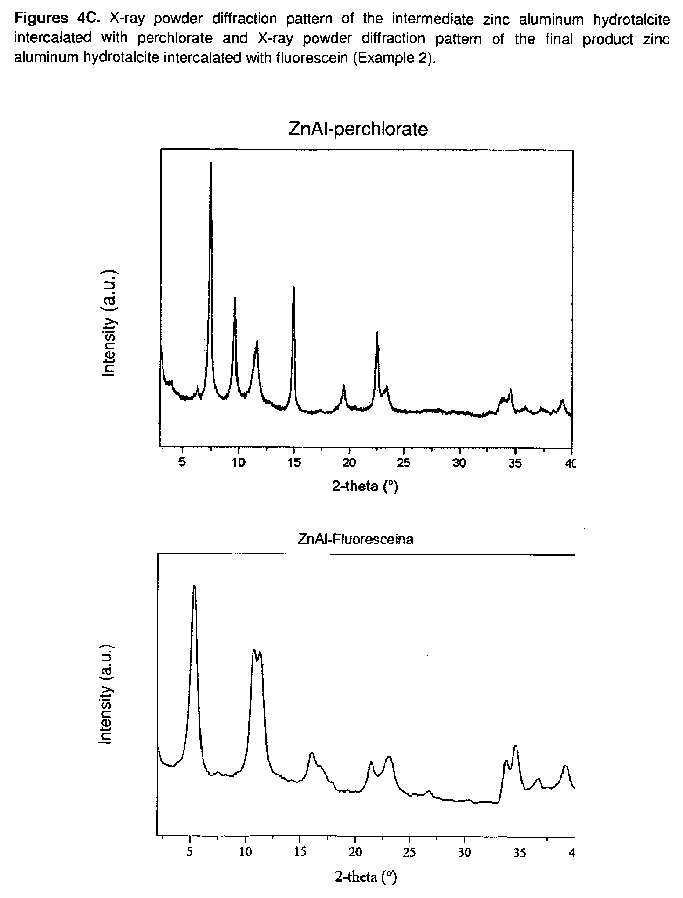

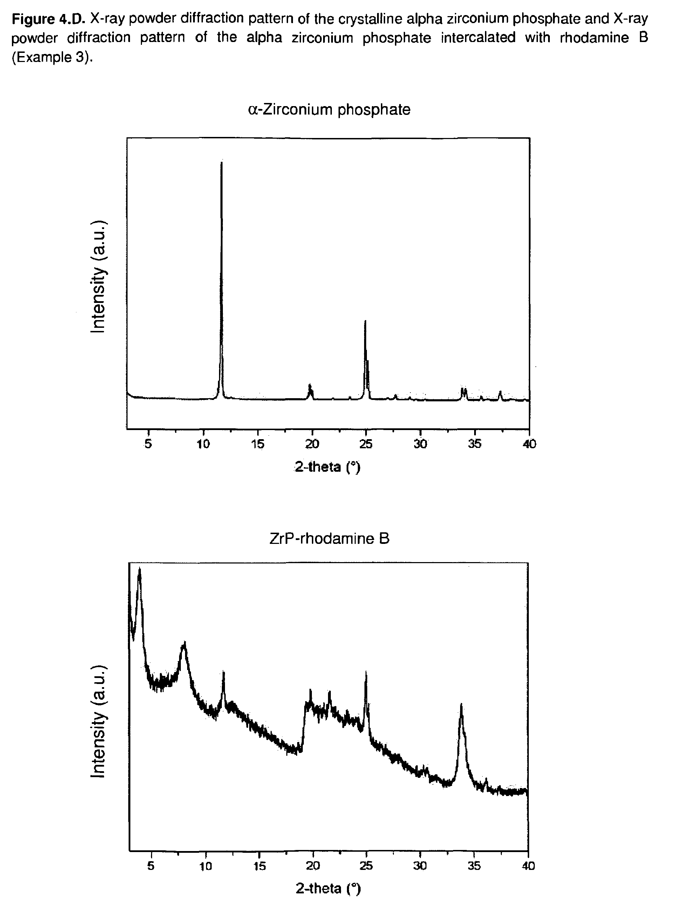

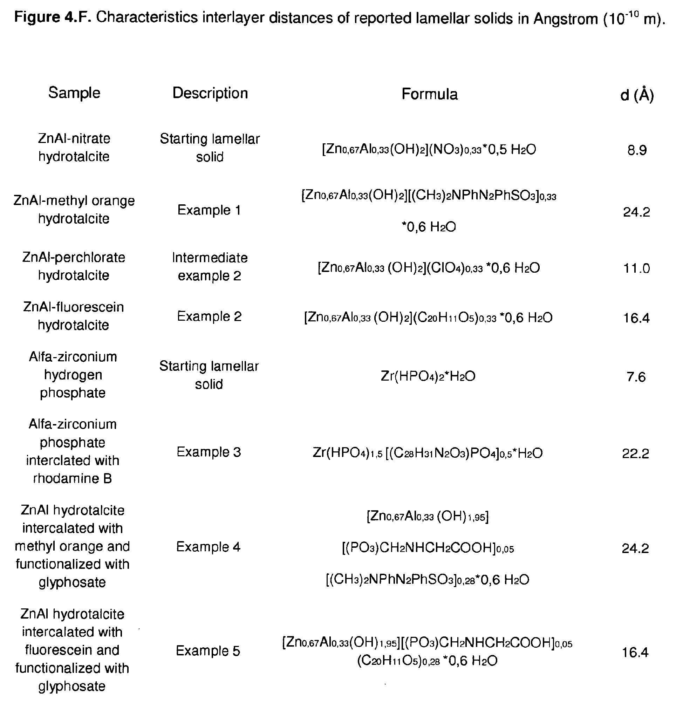

Examples of preparation of hydrotalcites functionalized with the method of grafting and intercalated with dyes, according to the invention, are described in Examples 4 and 5. In Figures 4 are shown some X-ray diffraction spectra of powders and thermogravimetric analyses, that allowed to assign the structural formulas to dyes functionalized systems prepared with the method of the invention.

According to the invention, the external coating requires the functionalization of the inorganic solid lamellae, containing the intercalated dye species, by using a polymeric film. Such film is able to generate a microcapsule containing the lamellar solid and the intercalated dye (figure 1). The polymeric coating, which does not modify dye colour, is realized by polymerization technique induced through photoinduced cross-linking reactions.

The procedure requires that the lamellar solid, containing the intercalated dye, is dispersed in a water solution of monomers or oligomers considering that the weight percentage monomer/oligomer (% weight m.) compared to intercalated lamellar solid weight (% weight s.l.i.) can be modified according to the following ranges: (% weight m.) should be between 20-0.1 times higher than (% weight s.l.i.), preferably (% weight m.) should be between 10-0.1 times higher than (% weight s.l.i.), most preferably (% weight m.) must be between 5-0.1 times (% weight s.l.i.).

Polymerization mechanism starts by the UV curing of the suspension containing the monomer and the lamellar solid containing the intercalated dye using a UV lamp based on a low pressure mercury bulb.

The used monomer is in a non exclusive way vynil pyrrolidone type, vynil acetate type, and in all cases a vinyl type in order to realize a final coating of polyvinylpyrrolidone (PVP) or, polyvinyl alcohol (PVA), or polyvinyl derivatives. Further monomers that can be employed according to the invention are vinyl carbonate and vinyl carbammate or their olygomers, ethyl or methyl acrylate, ethyl or methyl methacrylate, vinyl chloride, vinyl acetate and other functionalized monomers belonging to anhydride and styrene classes. The employed olygomer was PVP (PVPK40 type).

In this case the final coating shows on the surface the functional groups such as amino and/or hydroxyl and/or carboxylic available to interact with fabric protein natural fiber forming polymeric pendants able to anchor by multiple bonds, in the normal use conditions, the lamellar solid coating containing the dye with the protein fiber.

According to the invention, examples 6 and 7 describe the preparation of lamellar solids intercalated by dye and functionalized by the superficial coating method.

Surprisingly it was highlighted that systems as lamellar solids intercalated by dyes and functionalized according to the invention are useful agents for the dyeing of natural protein textile fibers as wool, silk and cashmere.

In fact, the use of anchoring techniques defined as coating method produce a substantial improvement because of the strong and multiple bonds established between the lamellar solid intercalated by the dye and functionalized according to the invention and the protein natural fiber (see figure 2 for example). The efficacy of system anchoring to the natural protein fiber is demonstrated by studies on colour retention on yarn submitted to strong washing cycles.

Colour retention was analyzed by UV-VIS spectrophotometer measuring dye concentration in the washing water (Table 1).

The dyeing was performed on cashmere fibers as wad by using a water suspension containing acetic acid 5%. The dyeing system employed was 0.25 % weight in respect to cashmere. The system was heated starting from 20°C for 1.2 C°/min till 50°C, at this temperature the system was maintained for 1 hour under stirring.

Comparing experiments among dyeing processes as described above, in which the effect of temperature on dye anchoring is analyzed, demonstrated that in the case of dyeing systems according to the invention, dyeing efficacy reaches optimal results at 40-60°C in comparison to the traditional dyeing systems of natural protein textile fibers for knitwear for which the temperatures of 85-95°C are used.

**Table 1. Dye retention of fabric samples after washing cycles.**

| **N.** | **Fiber dye** | **Visible absorbance of cashmere yarns**** | **Dye concentration in the dyeing water** | **Dye concentration in the washing water**** | | |
|---|---|---|---|---|---|---|
| | | | | **Washing I** | **Washing II** | **Washing III** |
| 1 | none | < 0.0001 no dyeing fiber | [-] | [-] | [-] | [-] |
| 2 | Rhodamine B as such | 0.57 | 1x10⁻⁴ M | 6.5x10⁻⁵ M | 3.2x10⁻⁵ M | 1.3x10⁻⁵ M |
| 3 | Rhodamine B intercalated in to zirconium phosphate | 0.64 | 9.8x10⁻⁵ M | 6.2x10⁻⁵ M | 1.8x10⁻⁵ M | 1.0x10⁻⁵ M |
| 4 | Rhodamine B intercalated in to zirconium phosphate and coated with PVP | 0.63 | 9.8x10⁻⁵ M | 1.9x10⁻⁶ M | 1.0x10⁻⁷ M | <1.0x10⁻⁷ M |
| 5 | Fluorescein intercalated in to grafted hydrotalcite | 0.49 | 2.0x10⁻⁵ M | 2.0x10⁻⁶ M | 2.7x10⁻⁶ M | 3.0x10⁻⁶ M |
| 6 | Fluorescein intercalated in to hydrotalcite and coated with PVP | 0.41 | 1.9x10⁻⁵ M | 4.0x10⁻⁷ M | 1.0x10⁻⁷ M | <1.0x10⁻⁷ M |
| 7 | Methyl orange intercalated in to grafted hydrotalcite | 0.80 | 2.6x10⁻⁵ M | 6.Ox10-⁶ M | 1.8x10-⁶ M | 2.7x10⁻⁶ M |
| 8 | Methyl orange intercalated in to hydrotalcite and coated with PVP | 0,77 | 2,4x10⁻⁵M | 1.2x10⁻⁶M | 1.0x10⁻⁷M | <1.0x10⁻⁷M |

| | | | | | | |
|---|---|---|---|---|---|---|
| *Fiber is represented by cashmere flake, dyed in a water suspension containing 5% of acetic acid and 0,25% in weight of dye. T°: 20 °C →50 °C 1,2 C°/min, break 60 min. ** Spectrophotometrically determined, washing conditions:100 ml of deionized water added by Tritonix (neutral surfactant) for 1 g of yarn, 90 °C for 20 min, cycle. | | | | | | |

Data shown in table 1 reveal that without a functionalized polymeric coating and the formation of anchoring pendants, lamellar solids bind the natural protein fiber by weak bonds similar to free dye. This is explained by the amount of dye released in the water during washing cycles (each cycle was performed at 90°C, for 20 min). In the case of dyeing processess using rhodamine B as dye, both in free form (N°2) and intercalated into zirconium phosphate (N°3), the third washing cycle shows a water concentration of 10⁻⁵ M, the same of the 2° and 1 ° washing cycle. These results highlight that the dye is lightly anchored to the fiber and thus it is released systematically during the washing cycles.

In the case of rhodamine B intercalated in zirconium phosphate and then coated by photo cross-linked PVP (N°4), dye concentration in the washing water decreases linearly until undetectable values under 10⁻⁷ M. Such profile highlights that the dyeing system lamellar solid coated by photo cross-linked PVP is strongly and efficaciously bonded to the natural protein fiber. The same conclusion, for the same reasons, can be given in the case on fluorescein intercalated into hydrotalcite and coated by photo cross-linked PVP (N°6) and methyl orange intercalated into hydrotalcite and coated by photo cross-linked PVP (N°7).

Also in the case of methyl orange intercalated into zinc aluminium hydrotalcite grafted by phospho methyl glycinic pendants (N° 7), and fluorescein intercalated into zinc aluminium hydrotalcite grafted by phospho methyl glycinic pendants (N° 5) the profile is similar to that coming from lamellar solid coated by photo cross-linked PVP. The dye is fixed to the cashmere fiber and its concentration in the washing water in strong conditions (100 ml of deionized water, 0,55 g Tritonix-neutral surfactant for 1 g of yarn, 90°C, per 20 min) is very low.

Absorbance values analysis of dyed fibers by free dyes, dyes intercalated into lamellar solids and dyes intercalated into lamellar solids and coated by photocross-linked PVP (table 1), do not show substantial changing of different materials. This result reveals that dye intercalation into the lamellar solid does not modify substantially the dye original colour, expressed as ability to absorb the incident light. Moreover, the PVP photo cross-linked coating maintains the value of reflected light as that of intercalated dyes, showing that the coating is transparent to visible light and thus devoid of negative effects on final colouring.

Dyes confinement into the lamellar solid generates a protective effect favourable in the use of light sensitive dyes, particularly fluorescent and/or thermochromic and/or photochromic. The photoprotective effect of the lamellar solid is demonstrated in the case of the dyes rhodamine and fluorescein intercalated respectively into α-zirconium phosphate and synthetic hydrotalcite zinc-aluminum type.

Both rhodamine and fluorescein are fluorescent dyes which undergo to rapid photodegradation but, as demonstrated from absorption spectra after irradiation (Figures 5-A.B.C.), the intercalation of fluorescent species into the lamellar solid improves their stability to light stimulation.

The comparison of the spectra registered after irradiation in the visible region with that deriving from the samples after dyeing (Figures 5-A.B.C), show an optimal absorption spectra overlapping demonstration the high dye photostability in the dyed fiber.

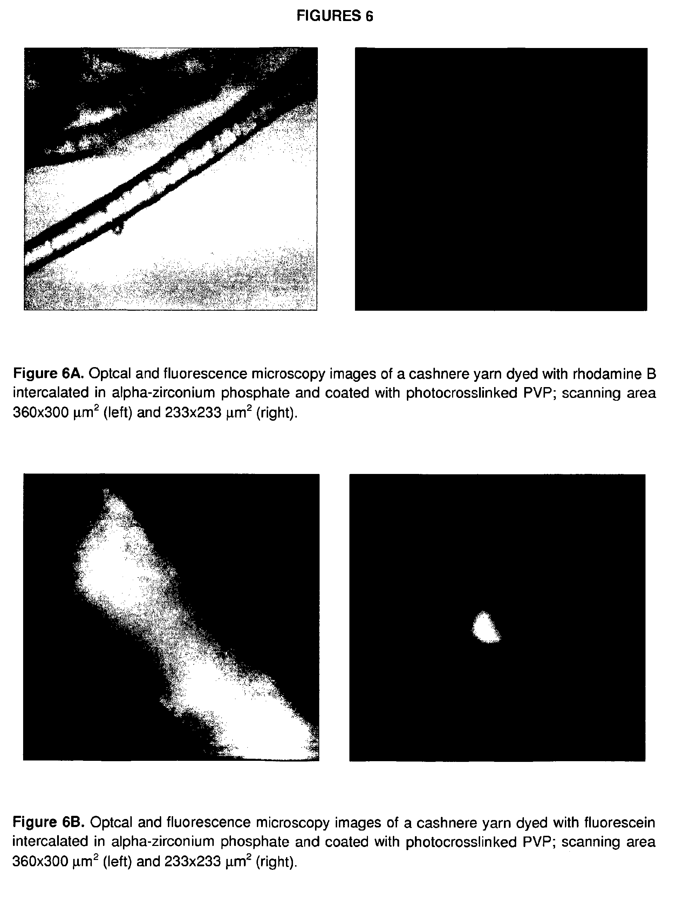

Figure 6.A, obtained by an optical confocal microscopy and in fluorescence, shows that the cashmere fibers are equally dyed and fluorescent. Figure 6.B shows a micrometric particle of lamellar solid anchored to cashmere textile fiber, recognizable as the region with the highest fluorescence.The particle is represented by α-zirconium phosphate intercalated with rhodamine and coated by photo crosslinked PVP.

Once the lamellar solid intercalated by the dye and functionalized according to invention methods was obtained, this can be submitted to dyeing processes in order to obtain products for further manufacturing.

Cashmere dyeing examples, according to the invention, are shown in the examples 8, 9 and 10.

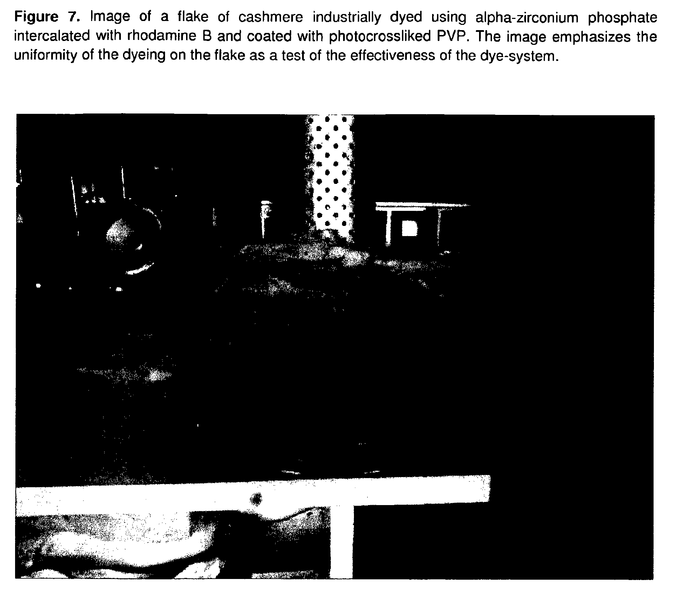

Figure 7 shows the image of cashmere flake submitted to dyeing procedure in a industrial machine by using as fluorescent dye α-zirconium phosphate intercalated with rhodamine and coated by PVP (example 8). The uniformity of wad colour shows the efficacy of dyeing system and the lack of problems connected to wad dimensions.

The parameters that must be taken in consideration during the preparation of dye intercalated into lamellar solids according to the invention are:
- type of protein natural fiber;
- type of inorganic lamellar solid, as hydrotalcites and zirconium phosphate;
- chemical properties of the dye used during the intercalation reactions, as fluorescent, thermochromic and photochromic;
- concentration (loading) of the dye into the lamellar solid. Such concentration can advantageously vary between 0.1 weight % and 40 weight % weight of dye in respect to the weight % of the inorganic material (lamellar solid);
- weight percentage of lamellar solid functionalized with the dye in respect to the protein natural fiber. Typically the absolute percentage of the dye in respect to the textile fiber can vary between the weight percentages of 20-0.1 %, or preferably of 8-0.25%, or most preferably of 3-0.5%.
- type of lamellar solid functionalization suitable to make it able to anchor the protein natural fiber. In the grafting method it is possible to modify the alkyl pendant length and the type of functional group suitable for fiber binding while, in the coating method it is possible to modify the kind of coating polymer forming the microcapsule;
- dyeing process type which conditions are decided based on expert knowledge.

Therefore it is clear that the favourable choice and control of the abovementioned parameters allows to obtain clothing suitable for many applications in the knitwear particularly in the production of natural textile fibers dyed by dyes with low solidity and showing the problem of photoinstability and/or thermolability and/or sensitive to oxidation and/or reduction or hydrolysis. Among them dyes showing such problems, particularly interesting are fluorescent and/or thermochromic and/or photochromic molecules because of their commercial applications.

It is necessary to consider that the procedure, according to the invention, is not a superficial treatment but a complete polymeric coating of the lamellar solid intercalated by the dye, in order to obtain a microcapsule maintaining a spherical morphology of the final microcapsules of homogeneous dimensions between 1 and 10 microns. The obtained microcapsule has a polymeric film that covers the intercalation product avoiding covalent interactions.

The use of a polymeric coating as polyvinylpyrrolidone (PVP) induces the formation of pendants on the coating surface for textile fibers anchoring. The pendants do not bind directly the lamellae but the polymeric film. Such procedure has the aim to avoid dye leakage in order to obtain a high solidity to washing and rubbing and, at the same time, to favour the binding to natural textile fibers.

The microcapsule has dimensions between 1 and 50 micron and the average particle dimensions in the order of 1-10 micron as the particles must anchor textile fibers avoiding tactile sensation alterations (particle dimensions must be < 100 micron in order to avoid tactile sensation modification) and get in contact with the skin without penetrate the corneum stratum (in this case the dimensions must be ≥ 1 micron to avoid the penetration). In this way tactile sensation of the fiber is maintained after dyeing procedure.
Two further superficial coating methods of the intercalation compuond have been enforced.

### Second superficial coating method.

Microcapsule preparation is divided in two steps:
1) polymeric coating of the intercalation compound particles (microencapsulation);
2) microcapsules superficial treatment for pendants achievement.

### 1) Polymeric coating of the intercalation compound particles.

As coating agent for intercalation compound particles was used poly(ethyl) methacrylate (PEMA), belonging to acrylate family, that is a transparent, flexible and water insoluble polymer.

The intercalation compounds coating has been performed by microencapsulation procedure based on the preparation of an oil in water emulsion (O/W). In particular the oil phase (O), or internal phase, is represented by a water immiscible solvent and showing a low boiling point (eg. dichloromethane, chloroform) while the water phase (W), or external phase, is represented by a 2% water solution of polyvinyl alcohol (PVA) (MW: 30.000-70.000, hydrolyzed 87-90%) used as stabilizing agent of the final emulsion.

Initially PEMA is dissolved in dichloromethane (representing the oil phase-internal phase) then the intercalation compound particles are dispersed in the obtained (intercalation compound/PEMA ratio 1:5 wt./wt.). In order to reduce particle size of the intercalation compound and to favour its encapsulation, the dispersion is sonicated by a sonication bath for about 20 min. The dispersion obtained is successively emulsionated to the external phase (PVA 2% water solution) under magnetic stirring. The O/W ratio is 1:5 v/v.

The obtained emulsion is maintained under magnetic stirring (600 rpm) at room temperature for 12 hours in order to promote organic phase evaporation e to obtain the solid microcapsules. These are recovered by centrifugation and washed with deionized water.

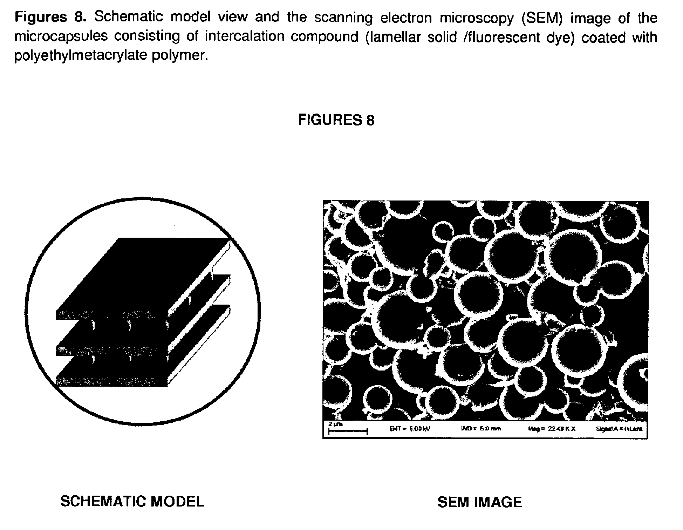

Figure 8 shows a schematic representation and a image of the scanning electronic microscopy (SEM) of the obtained particles.

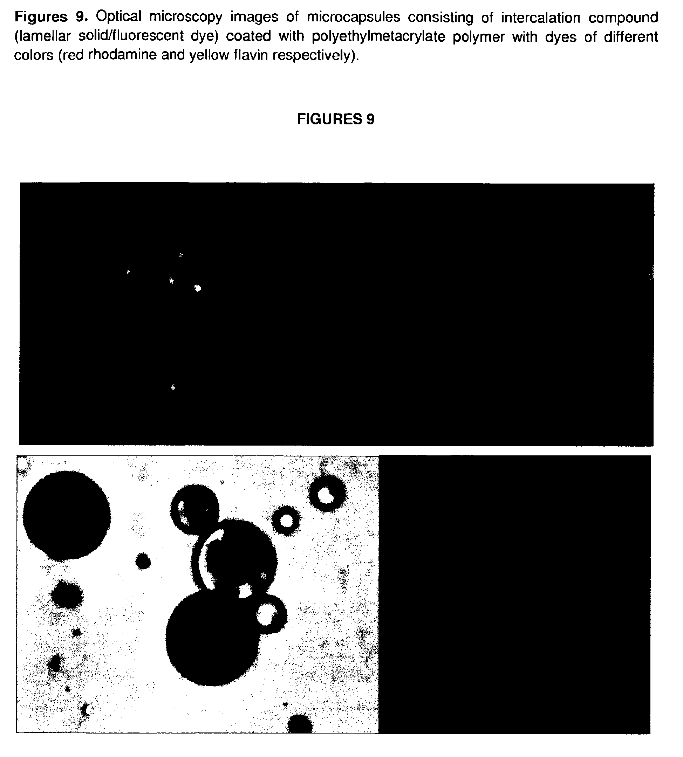

Figure 9 shows two images at the optic microscopy of two particles of different colour.

### 2) Microcapsules superficial treatment to obtain the pendants.

The monomer vinylpyrrolidone (PV) or the oligomer PVP (PVPK40 type) is solubilized in water using an amount twice the weight of microcapsules (microcapsules/PVP ratio 1/2 wt./wt.). Microcapsules are dispersed in this solution and irradiated, under magnetic stirring for 6 hours in order to obtain a photo induced cross linking. The final product is recovered by centrifugation, washed with deionized water and dried at 37°C.

### Third method of polymer coating

This method allows to obtain the microcapsules by carrying the coating and surface treatment (step 1 and step 2 respectively of the previous method) in a single step.

The procedure followed is the same of the second method, the difference is represented by the composition of the external phase (A) in which is dissolved not only polyvinyl alcohol (PVA) to 2%, as a stabilizing agent of the emulsion, but also PV monomer or oligomer PVP in the amount of 2%.

The emulsion is magnetic stirred (600 rpm) and irradiated at room temperature for 6 hours, in order to obtain the crosslinking of PVP. The microcapsules obtained are retrieved by centrifugation, washed with deionized water and dried in an oven at 37 ° C.

PEMA and PVP are photocrosslinking polymers that during radiation may reach a close contact. During 6 hours of radiation of the polymers crosslink and gradually solidify, obtaining microcapsules already functionalized with PVP.

Poly(ethyl)metaacrylate (PEMA), belonging to the family the acrylate, was used for coating of the particles of the intercalation compounds because it is a transparent, flexible, insoluble in water polymer.

The intercalation compounds were coated using the microencapsulation procedure, that requires the preparation of an oil in water emulsion (O / W). In detail, the oil phase (O) or internal phase, is constituted by a water immiscible solvent and with a low boiling point (eg dichloromethane, chloroform) while the water phase (A), or external phase, is represented by an aqueous solution of polyvinyl alcohol (PVA) to 2% (MW: 30,000- 70,000, hydrolyzed 87-90%) used as a stabilizer of the final emulsion and 2% of polyvinylpyrrolidone (PVP).

PEMA is dissolved in dichloromethane (which represents the oil-internal phase) and, in the obtained solution, are subsequently dispersed particles of the intercalation compound (ratio matrix / polymer 1:5 w / w). The dispersion is sonicated in an ultrasonic bath for about 20 minutes, to reduce the size particles of the intercalation compound, and facilitate the encapsulation. The dispersion obtained is then emulsified, with stirring, to the external phase (aqueous PVA solution at 2% and 2% polyvinylpyrrolidone PVP). The O / W ratio is 1:5 v / v.

The emulsion is left under magnetic stirring (600 rpm) and irradiated at room temperature, for 6 hours. The obtained microcapsules are recovered by centrifugation, washed with deionized water and dried in an oven at 37 ° C.

Follow the examples used for the detailed description.

### Example 1. Preparation of zinc aluminum hydrotalcite intercalated with the dye methyl orange.

1 g of ZnAl hydrotalcite-nitrate having the formula [Zn₀, ₆₇Al₀, ₃₃(OH)₂](NO₃)_{0.33} * 0.5 H₂O, purchased from Prolabin & Tefarm srl (product code HT-203), is dispersed under magnetic stirring in a 0.15 M aqueous solution (de-ionized and distilled water) containing 0896 g of 4-dimetilamminoazobenzen-4'-sulfonate sodium (methyl orange) for 18 hours. The resulting solid is separated by filtration (under vacuum with 0.45 micron filter paper) or centrifugation (5 min 4000 rpm / min) and then washed with 100 mL of de-ionized water until it becomes colorless water (3 washes). Finally the solid is dried at 60 ° C in a ventilated oven for 18 hours. The product obtained (1.5 g), orange coloured, has the following formula:

[Zn₀, ₆₇Al₀, ₃₃(OH)₂][(CH₃)₂NPhN₂PhSO₃]_{0.33} * 0.6 H₂O.

### Example 2. Preparation of zinc aluminum hydrotalcite intercalated with the fluorescein dye.

1 g of ZnAl hydrotalcite-nitrate having the formula [Zn₀, ₆₇Al₀, ₃₃(OH)₂](NO₃)_{0.33} * 0.5 H₂O, purchased by Prolabin & Tefarm srl, (product code HT-203), is dispersed under magnetic stirring in 100 mL of an aqueous solution (water de-ionized and distilled) of perchlorate sodium containing 3.85 g of sodium perchlorate, for 18 hours. The resulting solid is separated by filtration (under vacuum with 0.45 micron filter paper) or centrifugation (5 min 4000 rpm / min) and subsequently washed with 100 mL of de-ionized water until disappearance of the perchlorate ions in water (3 washes). Finally the solid is dried at 60 ° C in a ventilated oven.

The recovered solid is then dispersed for 24 hours under stirring in 100 mL of an aqueous solution (de-ionized and distilled water) of fluorescein containing 1.21 g of fluorescein acid and 0,146 g of NaOH. The resulting solid is separated by filtration (under vacuum using filter paper 0.45 micron) or centrifugation (5 min at 4000 rpm) and subsequently washed with 100 mL of de-ionized water until disappearance of the color in the water (about 3 washes). Finally the solid is dried at 60 °C in a ventilated oven for 18 hours. The obtained product (1.6 g), of yellow color, has the following formula:

[Zn_{0,67}Al_{0,33}(OH)₂](C₂₀H₁₁O₅)_{0.33} * 0.6 H₂O.

### Example 3. Preparation of alpha zirconium phosphate intercalated with rhodamine B.

1 g of alpha-zirconium hydrogen phosphate having the formula Zr (HPO₄)₂ * H₂O, supplied by Prolabin & Tefarm Ltd, product code ZP-101, is dispersed in 67 mL of de-ionized water. To the dispersion are added slowly and under vigorous stirring 33 mL of a 0.1 M aqueous solution of propylamine. To the dispersion thus obtained are added with stirring 0,795 g of Rhodamine B, the suspension is kept under stirring for 18 hours. The resulting gelatinous solid is separated by centrifugation (10 min at 5000 rpm) and subsequently washed with 100 mL of de-ionized water until neutrality of the waters (3 washes). Finally, the gelatinous solid is dried at 80 °C for 18 hours in a ventilated oven. The obtained product (1.7 g), of pink color, has the following formula:

Zr(HPO4)_{1.5}[(C₂₈H₃₁N₂O₃)PO₄]_{0.5} * H₂O.

### Example 4. Preparation of zinc aluminum hydrotalcite intercalated with methyl orange dye and functionalized according to the method of grafting with the pendant [(phosphonomethyl) amino] acetic acid also known as N-(phosphonomethyl) glycine or glyphosate.

1 g of ZnAl hydrotalcite-nitrate having the formula [Zn₀, ₆₇Al₀, ₃₃(OH)₂](NO₃)_{0.33} * 0.5 H₂O supplied by Prolabin & Tefarm Ltd, product code HT-203, is dispersed under stirring in 100 mL of an aqueous solution (deionized and distilled water) containing 0,070 g of N-(phosphonomethyl) glycine and 0.0166 g of NaOH. The resulting solid is separated by filtration (under vacuum using filter paper 0.45 micron) or centrifugation (5 min 4000 rpm / min) and subsequently washed with 100 mL of de-ionized water until neutrality of the waters (3 washes). Finally the solid is dried at 80 °C for 12 hours in a ventilated oven where the grafting (anchoring) reaction takes place through the reaction between the hydroxyl group of the phosphonate and a hydroxyl of the lamellar solid, which leads to the elimination of a molecule of water and the formation of a polar covalent bond between the phosphonate and the metal of the lamella.

The recovered solid is then dispersed under stirring in an 0.15 M aqueous solution (de-ionized and distilled water) containing 0,864 g of 4-dimethylaminoazobenzen-4'-sulfonate sodium salt (methyl orange or helianthin) for 18 hours. The resulting solid is separated by filtration (under vacuum using filter paper 0.45 micron) or centrifugation (5 min at 4000 rpm) and subsequently washed with 100 mL of de-ionized water until disappearance of the color of the water (about 3 washes). Finally the solid is dried at 60 °C in a ventilated oven for 18 hours. The obtained product (1.5 g), of intense yellow color, has the following formula:

[Zn_{0,67}Al_{0,33}(OH)_{1.95}][(PO₃)CH₂NHCH₂COOH]_{0.05}[(CH₃)₂NPhN₂PhSO]_{0.28} * 0.6 H₂O

### Example 5. Preparation of zinc aluminum hydrotalcite intercalated with fluorescein dye and functionalized according to the method of grafting with the pendant [(phosphonomethyl) amino] acetic acid also known as N-(phosphonomethyl) glycine or glyphosate.

1 g of ZnAl hydrotalcite-nitrate having the formula [Zn_{0,67}Al_{0,33}(OH)₂](NO₃)_{0.33} * 0.5 H₂O supplied by Prolabin & Tefarm Ltd, product code HT-203, is dispersed under stirring in 100 mL of an aqueous solution (de-ionized and distilled water) containing 3.85 g of sodium perchlorate for 18 hours. The resulting solid is separated by filtration (under vacuum using filter paper 0.45 micron) or centrifugation (5 min at 4000 rpm) and subsequently washed with 100 mL of de-ionized water until disappearance of the ions perchlorate in water (approximately 3 washes ). Finally the solid is dried at 60 °C in a ventilated oven.

The recovered solid is dispersed under stirring in 100 mL of an aqueous solution (de-ionized and distilled water) containing 0.070 g of N-(phosphonomethyl) glycine and 0,0166 g of NaOH. The resulting solid is separated by filtration (under vacuum using filter paper 0.45 micron) or centrifugation (5 min at 4000 rpm) and subsequently washed with 100 mL of de-ionized water until neutrality of the waters (3 washes). Finally the solid is dried at 80 °C for 12 hours in a ventilated oven where the grafting (anchoring) reaction takes place through the reaction between the hydroxyl group of the phosphonate and a hydroxyl of the lamellar solid, which leads to the elimination of a molecule of water and the formation of a polar covalent bond between the phosphonate and the metal of the lamella.

The recovered solid is then dispersed under stirring in 100 mL of an aqueous solution (de-ionized and distilled water) of fluorescein containing 1,211 g of fluorescein acid and 0,146 g of NaOH for 24 hours. The resulting solid is separated by filtration (under vacuum using filter paper 0.45 micron) or centrifugation (5 min at 4000 rpm) and subsequently washed with 100 mL of deionized water until disappearance of the color of the water (about 3 washes). Finally the solid is dried at 60 °C in a ventilated oven for 18 hours. The obtained product (1.5 g), of yellow color, has the following formula:

[Zn_{0,67}Al_{0,33}(OH)_{1.95}][(PO₃)CH₂NHCH₂COOH]_{0.05}(C₂₀H₁₁O₅)_{0.28} * 0,6 H₂O

### Example 6. Preparation of zinc aluminum hydrotalcite intercalated with fluorescein and coated with polyvinylpyrrolidone through the technique of polymerization by photoinduced crosslinking reaction.

1 g of zinc aluminum hydrotalcite intercalated with fluorescein (example 2) was suspended in 385 ml of aqueous solution (14,4 g/L) of oligomers of 1-vinyl-2-pyrrolidone (5,53 g); the suspension was irradiated, under stirring for 60 minutes, with a UV lamp based on low pressure mercury bulb at 254 nm to induce photocuring. The solution was evaporated at reduced pressure and 60 °C to obtain 6,5 g of yellow solid consisting of particles of hydrotalcite intercalated with fluorescein coated with PVP.

### Example 7. Preparation of alpha-zirconium hydrogen phosphate intercalated with rhodamine and coated with polyvinylpyrrolidone through the technique of polymerization by photoinduced crosslinking reaction.

1 g of alpha-zirconium hydrogen phosphate intercalated with rhodamine (Example 3) was suspended in 385 ml of aqueous solution (14,4 g / L) of oligomers of 1-vinyl-2-pyrrolidone (5,53 g); the suspension was irradiated, under stirring for 60 minutes, with a UV lamp based on low pressure mercury bulb at 254 nm to induce photocuring. The solution was evaporated at reduced pressure and 60 °C to obtain 6,5 g of solid pink color consisting of particles of zirconium phosphate intercalated with rhodamine coated with PVP.

### Example 8. Preparation of intercalation compounds consisting of lamellar solid and dye coated with microcapsules through the technique of the second polymeric coating method (2 steps).

500 mg of PEMA are dissolved in 10 ml of dichloromethane under magnetic stirring (600 rpm). In the obtained solution are subsequently dispersed 100 mg of particles of the intercalation compound (ratio intercalation compound/PEMA 1:5 w/w). The dispersion is then sonicated in an ultrasonic bath for 20 minutes and then emulsified, under magnetic stirring (600 rpm), to 40 ml of a 2% aqueous solution of polyvinyl alcohol (PVA) (MW: 30000-70000, hydrolyzed 87-90%).
The obtained emulsion is kept under magnetic stirring (600 rpm) at room temperature for 12 hours until complete evaporation of the organic phase and obtaining of solid microcapsules. The microcapsules are recovered by centrifugation (4000 rpm, 10 min) and washed with deionized water for three times. 100 mg of microcapsules are dispersed under magnetic stirring (600 rpm) in 20 ml of an aqueous solution containing 200 mg of polyvinylpyrrolidone (PVP) PVPK40 (ratio microcapsules/PVP 1/2 w/w). The dispersion obtained is kept under magnetic stirring (600 rpm) and irradiated (λ = 254 nm) for 6 hours at room temperature. The final product is recovered by centrifugation (4000 rpm, 10 min), washed three times with deionized water and dried in an oven at 37 °C for 12 hours.

### Example 9. Preparation of intercalation compounds consisting of lamellar solid and dye coated with microcapsules through the technique of the third polymeric coating method (1 step).

500 mg of PEMA are dissolved in 10 ml of dichloromethane under magnetic stirring (600 rpm). In the obtained solution are subsequently dispersed 100 mg of particles of the intercalation compound (ratio intercalation compound/PEMA 1:5 w/w). The dispersion is then sonicated in an ultrasonic bath for 20 minutes and then emulsified, under magnetic stirring (600 rpm), to 40 ml of an aqueous solution 2 wt% of polyvinyl alcohol (PVA) (MW: 30000-70000, hydrolyzed 87 -90%) and 2 wt% of polyvinylpyrrolidone (PVP, type PVPK40).
The obtained emulsion is kept under magnetic stirring (600 rpm) and irradiated (λ = 254 nm) for 6 hours at room temperature. The final product is recovered by centrifugation (4000 rpm, 10 min), washed three times with deionized water and dried in an oven at 37 °C for 12 hours.

### Example 10. Process of dyeing of cashmere fibers in the form of flake using alpha-zirconium hydrogen phosphate intercalated with rhodamine and coated with polyvinylpyrrolidone.

A kilogram of cashmere in the form of flake has been housed in a dyeing tank of 20 L of volume and kept in suspension with deionized water stirred by a hydraulic pump to promote contact between solution and flake. Subsequently acetic acid was added to the solution up to a concentration of 5 wt%, then an aqueous suspension (200 ml) containing 2.5 g of alfa zirconium hydrogenphosphate intercalated with rhodamine and coated with polyvinylpyrrolidone (example 7), equal to 0.25 wt% with respect to the flake of cashmere was added. The suspension was kept under stirring and heated from 22 °C to 50 °C with a programmed heating rate of 1.2 °C/min. Then the dyeing tank was kept at 50 °C for 60 minutes.
Subsequently acetic acid was added up to the concentration of 10 wt% and the suspension was maintained under stirring for 6 minutes, then the dyeing tank has been evacuated from the solution and refilled with a solution of mixed surfactants in order to remove the excess of dye. After this washing, the dyed flake was recovered and dried in a current of hot air in order to be ready for subsequent processing.

### Example 11. Process of dyeing of cashmere fibers in the form of flake using zinc aluminum hydrotalcite intercalated with fluorescein and coated with polyvinylpyrrolidone.

A kilogram of cashmere in the form of flake has been housed in a dyeing tank of 20 L of volume and kept in suspension with deionized water stirred by a hydraulic pump to promote contact between solution and flake. Subsequently acetic acid was added to the solution up to a concentration of 5 wt%, then an aqueous suspension (200 ml) containing 2.5 g of alfa zirconium hydrogenphosphate intercalated with fluorescein and coated with polyvinylpyrrolidone (example 6), equal to 0.25 wt% with respect to the flake of cashmere was added. The suspension was kept under stirring and heated from 22 °C to 50 °C with a programmed heating rate of 1.2 °C/min. Them the dyeing tank was kept at 50 °C for 60 minutes.
Subsequently acetic acid was added up to the concentration of 10 wt% and the suspension was maintained under stirring for 6 minutes, then the dyeing tank has been evacuated from the solution and refilled with a solution of mixed surfactants in order to remove the excess of dye. After this washing, the dyed flake was recovered and dried in a current of hot air in order to be ready for subsequent processing.

### Example 12. Process of dyeing of cashmere fibers in the form of flake using zinc aluminum hydrotalcite intercalated with the fluorescein dye and functionalized according to the grafting method with the pendant [(phosphonomethyl) amino] acetic acid.

A kilogram of cashmere in the form of flake has been housed in a dyeing tank of 20 L volume and kept in suspension with deionized water stirred by a hydraulic pump to promote contact between solution and flake. Subsequently acetic acid was added to the solution up to a concentration of 5 wt%, then an aqueous suspension (200 ml) containing zinc aluminum hydrotalcite intercalated with the fluorescein dye and functionalized according to the grafting method with the pendant [(phosphonomethyl) amino] acetic acid (example 5), equal to 0.25 wt% with respect to the flake of cashmere was added. The suspension was kept under stirring and heated from 22 °C to 50 °C with a programmed heating rate of 1.2 °C/min. Then the dyeing tank was kept at 50 °C for 60 minutes.
Subsequently acetic acid was added up to the concentration of 10 wt% and the suspension was maintained under stirring for 6 minutes, then the dyeing tank has been evacuated from the solution and refilled with a solution of mixed surfactants in order to remove the excess of dye. After this washing, the dyed flake was recovered and dried in a current of hot air in order to be ready for subsequent processing.

## Claims

1. Method for dyeing and/or colouring of natural protein textile fibers comprising the following steps:
a) intercalation and/or absorption of dyes into lamellar solids, in order to obtain a lamellar solid intercalated with dyes,
b) polymeric coating of the surface of the aforemetionated lamellar solid intercalated with dyes, in order to obtain a microcapsule totally coated with a polymeric film having an essentially spherical shape and a diameter ranging between 1 and 50 microns, preferably between 1 - 10 microns,
c) formation of polymeric pendants bound to the external surface of the aforemetionated polymeric film coating constituting the microcapsule, which are able to anchor the microcapsule to natural protein fibers.

2. Method according to claim 1, in which the aforementionated step (b) of coating and/or the aforementionated step (c) of polymeric pendants formation are performed through a polymerization technique caused by photo-induced crosslinking reactions.

3. Method according to claim 2, in which the photo-induced crosslinking is obtained by irradiating an aqueous solution using a UV lamp and under stirring.

4. Method according to claims 2 or 3, in which the monomer-vinyl pyrrolidone (VP) or the oligomer poly-vinyl-pyrrolidone (PVP) are used to perform the aforementionated step (b) of coating and/or the aforementionated step (c) of polymeric pendants formation, in order to obtain a coating film and/or pendants of crosslinked poly-vinyl-pyrrolidone (PVP) polymer.

5. Method according to claim 4, wherein both the coating film and the pendants are constituted by crosslinked poly-vinyl-pyrrolidone (PVP) polymer obtained by photo-induced crosslinking of the vinyl pyrrolidone (VP) monomer or poly-vinyl-pyrrolidone (PVP) oligomer.

6. Method according to claim 5, in which the weight percentage of the monomer or oligomer ranging from 5 to 0.1 respect to the weight percentage of the lamellar solid intercalated with dyes.

7. Method according to claim 4, in which:
the coating film is a polymer belonging to the family of the acrylates and is obtained by emulsion of an oil phase (O) and an aqueous phase (W). The oil phase (O) is a solution formed by the polymer dissolved in a solvent immiscible with water and the said lamellar solids intercalated with dyes. The aqueous phase (W) is an aqueous solution formed by a stabilizer and polymers which act as pendant for the anchoring. Such polymers used in the W phase are: crosslinked poly-vinyl-pyrrolidone (PVP) obtained by photo-induced curing (crosslinking) of vinyl-pyrrolidone (VP) monomers, or poly-vinyl-pyrrolidone (PVP) oligomers, or thermoplastic polymers, or thermosetting polymers.

8. Method according to claim 7, in which the coating film is constituted by poly-ethyl-methacrylate (PEMA).

9. Method according to the claim 8, in which PEMA is dissolved in the oil phase (O) in dichloromethane, or chloroform and in the aqueous phase (W) the stabilizer is polyvinylalcohol (PVA).

10. Method according to any one of claims 7 to 9, in which the oil phase (O) containing the lamellar solid intercalated with dyes is subject to an ultrasonic treatment and the obtained dispersion is emulsified with the aqueous phase (W) through stirring.

11. Method according to any one of the previous claims, in which the lamellar solis is a synthetic hydrotacite having the following general formula:
[M(II)₁₋ₓM(III)ₓ(OH)₂]^{x+} [Aⁿ⁻_{x/n}]^{x-} ×mS (I)
where M(II) is a metal of valence (II), preferably selected between Mg, Zn, Co, Ni, Mn, Cu; M (III) is a metal of valence (III) selected among Al, Cr, Fe, V, Co; Aⁿ⁻ is an anion with charge n, which balances trivalent metal charge and it is preferably chosen among organic anions; m indicates the number of solvent molecules (generally water) co-intercalated (S). M(III) moles on the compound generally ranges between 0.20 and 0.40 and its value determines the layer charge density and the anion exchange capacity. The moles of co-intercalated solvent, m, ranges between 0 and 2, depending on the nature of A and on the degree of intercalation (for example 0.6 H₂O).

12. Method according to any one of claims 1 to 10, in which the lamellar solis is a zirconium phosphate in the forms alpha and gamma and having the followings general formulas:
alpha: Zr(HPO₄)₂₋ₙₓ(Bⁿ⁺PO₄)ₓₙ•H₂O
gamma: Zr(PO₄)(H₂PO₄)₁₋ₙₓ(Bⁿ⁺HPO₄)ₓₙ•2H₂O
where B is a generic cationic dye having generic of formula Bⁿ⁺ and net charge equal to n and preferably chosen among organic cations. The number of moles x in the formula generally ranges between 0.1 and 2 in the alpha phosphates and it is comprised between 0.1 and 1 in the gamma phosphate.

13. Method according to any one of claims 1 to 12, in which the dyes are are thermo-chromic.

14. Method according to any one of claims 1 to 12, in which the dyes are are fluorescent.

15. Method according to any one of claims 1 to 12, in which the dyes are are photo-chromic.

## Patentansprüche

1. Verfahren zum Färben von Textilfasern aus natürlichem Protein umfassend folgende Schritte:
a) Interkalierung und/oder Aufnahme von Farbstoffen im Innern von lamellaren Feststoffen, um einen Feststoff mit interkalierten Farbstoffen zu erhalten,
b) Polymerbeschichtung der Oberfläche des lamellaren Feststoffs mit interkalierten Farbstoffen, um eine vollständig mit Polymerfolie beschichtete Mikrokapsel zu erhalten, die im Wesentlichen kugelförmig ist und einen Durchmesser zwischen 1 und 50 µm, vorzugsweise 1-10 µm aufweist,
c) Bildung von Polymer-Anhängseln auf der Außenfläche der die Mikrokapsel bildenden Polymerbeschichtung, die dazu geeignet sind, sich auf den Textilfasern aus natürlichem Protein zu verankern.

2. Verfahren nach Anspruch 1, wobei der Schritt (b) der Beschichtung und/oder der Schritt (c) der Anhängselbildung durch Polymerisationstechnik infolge fotoinduzierter Vernetzungsreaktionen (crosslinking) vorgenommen wird.

3. Verfahren nach Anspruch 2, wobei die fotoinduzierte Vernetzung durch Bestrahlung einer wässrigen Lösung mittels einer UV-Lampe unter Rühren erfolgt.

4. Verfahren nach Anspruch 2 oder 3, wobei das Vinyl Pyrrolidon-Monomer (VP) oder das Polyvinyl Pyrrolidon-Oligomer (PVP) für den Schritt (b) der Beschichtung und/oder den Schritt (c) der Anhängselbildung verwendet wird, um eine Beschichtungsfolie und/oder Anhängsel von vernetztem Polyvinyl Pyrrolidon (PVP) Polymer zu erhalten.

5. Verfahren nach Anspruch 4, wobei sowohl die Beschichtung, als auch die Anhängsel aus vernetztem Polyvinyl Pyrrolidon (PVP) Polymer bestehen, was mittels fotoinduzierte Vernetzung des Vinyl Pyrrolidon (VP) Monomers oder Polyvinyl Pyrrolidon (PVP) Oligomers gewonnen wurde.

6. Verfahren nach Anspruch 5, wobei der Gewichtsanteil des Monomers oder des Oligomers zwischen 5 und 0,1 bezogen auf den Gewichtsanteil des lamellaren Feststoffs mit interkalierten Farbstoffen liegt.

7. Verfahren nach Anspruch 4, wobei:
- die Beschichtungsfolie ein Polymer aus der Familie der Acrylate ist und durch Emulsion einer Ölphase (O) und einer Wasserphase (W) gewonnen wird, wobei die Ölphase (O) einer aus einer Lösung besteht, die aus dem in einem nicht wassermischbaren Fließmittel gelösten Polymer und dem lamellaren Feststoff mit interkalierten Farbstoffen gebildet wird. Die Wasserphase (W) eine wässrige Lösung, aus die einem Stabilisator und Polymeren gebildet wird, die als Anhängsel zur Verankerung dienen. Die in der Wasserphase verwendeten Polymere sind:
vernetztes Polyvinyl Pyrrolidon (PVP), das durch fotoinduzierte Vernetzung von Vinyl Pyrrolidon (VP) Monomeren oder von Polyvinyl Pyrrolidon (PVP) Oligomeren oder thermoplastischen Polymeren oder wärmehärtenden Polymeren gewonnen wurde.

8. Verfahren nach Anspruch 7, wobei die Beschichtungsfolie aus Polyethylmethacrylat (PEMA) besteht.

9. Verfahren nach Anspruch 8, wobei das PEMA in der Ölphase (O) in Dichlormethan oder Chloroform gelöst ist und der Stabilisator in der Wasserphase (W) Polyvinylalkohol (PVA) ist.

10. Verfahren nach einem beliebigen der Ansprüche 7 bis 9, wobei die den lamellaren Feststoff mit interkalierten Farbstoffen enthaltende Ölphase (O) einer Ultraschallbehandlung unterzogen und die gewonnene Dispersion mit der Wasserphase (W) durch Rühren emulgiert wird.

11. Verfahren nach einem beliebigen der vorstehenden Ansprüche, wobei der lamellare Feststoff synthetisches Hydrotalcit mit folgender allgemeiner Formel ist:
[M(II)₁₋ₓM(III)ₓ(OH)₂]^{x+} + [Aⁿ⁻_{x/n}]^{x-} × mS (I)
wobei M(II) ein Metall der Wertigkeit (II) ist, vorzugsweise ausgewählt aus Mg, Zn, Co, Ni, Mn, Cu ist; M(III) ein Metall der Wertigkeit (III) ist, ausgewählt aus Al, Cr, Fe, V, Co;
Aⁿ⁻ ein Anion mit der Ladung n ist, das die Ladung des trivalenten Metalls ausgleicht und vorzugsweise aus organischen Anionen ausgewählt ist; m die Anzahl der ko-interkalierten Fließmittelmoleküle (S) (im Allgemeinen Wasser) ist. Die Molzahl M(III) der Mischung schwankt im Allgemeinen zwischen 0,20 und 0,40, wobei der Wert die Ladungsdichte der Beschichtung und die Anionenaustauschfähigkeit angibt. Die Molzahl des ko-interkalierten Fließmittels m liegt zwischen 0 und 2, je nach Art von A und und Interkalierungsgrad (beispielsweise 0,6 H₂O).

12. Verfahren nach einem beliebigen der Ansprüche 1 bis 10, wobei der lamellare Feststoff Zirkoniumphosphat in alpha- und gamma-Form mit folgenden allgemeinen Formeln ist:
alpha Zr(HPO₄)₂₋ₙₓ (BⁿPO₄)ₓₙ (•H₂O)
gamma Zr(PO₄)(H₂PO₄)₁₋ₙₓ (BⁿHPO₄)ₓₙ•2H₂O)
wobei B ein allgemeiner kationischer Farbstoff der Formel Bⁿ⁺ mit Nettoladung gleich n, vorzugsweise ausgewählt aus organischen Kationen, ist und die Molzahl x in der Formel im Allgemeinen zwischen 0,1 und 2 bei den alpha-Phosphaten bzw. zwischen 0,1 und 1 bei den gamma-Phosphaten liegt.

13. Verfahren nach einem beliebigen der Ansprüche 1 bis 12, wobei die Farbstoffe thermochrom sind.

14. Verfahren nach einem beliebigen der Ansprüche 1 bis 12, wobei die Farbstoffe fluoreszierend sind.

15. Verfahren nach einem beliebigen der Ansprüche 1 bis 12, wobei die Farbstoffe photochrom sind.

## Revendications

1. Procédé pour la coloration et/ou la teinture de fibres textiles naturelles protéiques, comprenant les étapes suivantes :
a) intercalation et/ou absorption de colorants à l'intérieur de solides lamellaires, de manière à obtenir un solide lamellaire intercalé avec des colorants,
b) revêtement polymérique de la surface dudit solide lamellaire intercalé avec des colorants, de manière à obtenir une microcapsule totalement revêtue d'un film polymère, ayant une forme sensiblement sphérique et un diamètre compris entre 1 et 50 microns, de préférence entre 1-10 microns,
c) formation de pendants polymériques sur la surface externe du ledit film polymère de revêtement constituant la microcapsule, aptes à ancrer la microcapsule sur lesdites fibres textiles naturelles protéiques.

2. Procédé selon la revendication 1, dans lequel ladite étape (b) de revêtement et/ou ladite étape (c) de formation de pendants polymériques sont effectuées moyennant une technique de polymérisation provoquée par des réactions de réticulation (crosslinking) photo-induites.

3. Procédé selon la revendication 2, dans lequel la réticulation photo-induite est obtenue par irradiation d'une solution aqueuse, sous agitation magnétique, à l'aide d'une lampe UV.

4. Procédé selon la revendication 2 ou 3, dans lequel on utilise le monomère vinylpyrrolidone (VP) ou l'oligomère polyvinylpyrrolidone (PVP) pour ladite étape (b) de revêtement et/ou ladite étape (c) de formation de pendants polymériques, de manière à obtenir un film de revêtement et/ou des pendants de polymère réticulé polyvinylpyrrolidone (PVP).

5. Procédé selon la revendication 4, dans lequel tant le film de revêtement que les pendants sont constitués de polymère réticulé polyvinylpyrrolidone (PVP) obtenu par réticulation (crosslinking) photo-induite du monomère vinylpyrrolidone (VP) ou de l'oligomère polyvinylpyrrolidone (PVP).

6. Procédé selon la revendication 5, dans lequel le pourcentage en poids du monomère ou oligomère est de 5 à 0,1 par rapport au pourcentage en poids du solide lamellaire intercalé avec des colorants.

7. Procédé selon la revendication 4, dans lequel :
- le film de revêtement est un polymère appartenant à la famille des acrylates et est obtenu par émulsion d'une phase huileuse (H) et d'une phase aqueuse (E). La phase huileuse (H) est une solution composée de polymère dissous dans un solvant non miscible avec de l'eau et desdits solides lamellaires intercalés avec des colorants. La phase aqueuse (E) est une solution aqueuse composée d'un agent stabilisant et de polymères qui agissent comme pendants pour l'ancrage. Les polymères utilisés dans la phase aqueuse sont :
- des polymères réticulés polyvinylpyrrolidone (PVP) obtenus par réticulation (crosslinking) photo-induite de monomères vinylpyrrolidone (VP) ou d'oligomères polyvinylpyrrolidone (PVP), ou de polymères thermoplastiques ou duroplastiques.

8. Procédé selon la revendication 7, dans lequel le film de revêtement est du poly méthacrylate d'éthyle (PEMA).

9. Procédé selon la revendication 8, dans lequel, dans la phase huileuse (H), le PEMA est dissous dans le dichlorométhane, ou chloroforme et dans la phase aqueuse (E) l'agent stabilisant est l'alcool polyvinylique (PVA).

10. Procédé selon l'une quelconque des revendications de 7 à 9, dans lequel la phase huileuse (H) contenant le solide lamellaire intercalé avec des colorants est soumise à un traitement aux ultrasons et la dispersion obtenue est émulsionnée avec la phase aqueuse (E) moyennant agitation magnétique.

11. Procédé selon l'une quelconque des revendications précédentes, dans lequel le solide lamellaire est l'hydrotalcite synthétique ayant la formule générale suivante :
[M(II)₁₋ₓM(III)ₓ(OH)₂]^{x+} + [Aⁿ⁻_{x/n}]^{x-} × mS (I)
où M(II) est un métal ayant valence (II), de préférence choisi entre Mg, Zn, Co, Ni, Mn, Cu. ; M(III) est un métal ayant valence (III), de préférence choisi entre Al, Cr, Fe, V, Co ;
Aⁿ⁻ est un colorant anionique ayant charge négative n, qui compense la charge du métal trivalent et est de préférence choisi parmi les anions organiques ; m est le nombre de molécules de solvant, généralement de l'eau, co-intercalé (S). Le nombre de moles x du cation M(III) de la formule du composé varie généralement entre 0.20 et 0.40 et sa valeur détermine la densité de charge de la couche et la capacité d'échange de l'anion. Le nombre de moles de co-solvant intercalé, m, est normalement compris entre 0 et 2, selon la nature de A et du degré d'intercalation (par exemple 0.6 H₂O) ;

12. Procédé selon l'une quelconque des revendications de 1 à 10, dans lequel le solide lamellaire est un phosphate de zirconium sous les formes alpha et gamma ayant la formule générale :
alpha : Zr(HPO₄)₂₋ₙₓ (BⁿPO₄)ₓₙ (•H₂O)
gamma : Zr(PO₄)(H₂PO₄)₁₋ₙₓ (BⁿHPO₄)ₓₙ•2H₂O)
où B est un colorant cationique générique ayant la formule générique Bⁿ⁺ et charge positive n, de préférence choisi parmi les cations organiques. Le nombre de moles x de la formule du composé varie en général entre 0,1 et 2 dans le cas des phosphates du type alpha et entre 0,1 et 1 dans les phosphates du type gamma.

13. Procédé selon l'une quelconque des revendications de 1 à 12, dans lequel les espèces colorantes sont du type thermo chromique.

14. Procédé selon l'une quelconque des revendications de 1 à 12, dans lequel les espèces colorantes sont du type fluorescent.

15. Procédé selon l'une quelconque des revendications de 1 à 12, dans lequel les espèces colorantes sont du type photo chromique.
